Europäisches Patentamt

(19) European Patent Office

Office européen des brevets

(11) Publication number: **0 172 764**

**A2**

# (12) EUROPEAN PATENT APPLICATION

(21) Application number: **85401455.2**

(22) Date of filing: **16.07.85**

(51) Int. Cl.⁴: **C 04 B 35/00**
**C 04 B 35/10, C 04 B 35/46**

(30) Priority: **18.07.84 JP 148877/84**

(43) Date of publication of application:
**26.02.86 Bulletin 86/9**

(84) Designated Contracting States:
**BE DE FR GB NL SE**

(71) Applicant: **KAWASAKI STEEL CORPORATION**
**1-28, Kitahonmachi-Dori 1-Chome**
**Chuo-ku Kobe-Shi Hyogo 650(JP)**

(72) Inventor: **Kumagai, Masato c/o Chiba Works**
**Kawasaki Steel Corporation 1, Kawasaki-cho**
**Chiba-shi Chiba-ken(JP)**

(72) Inventor: **Messing, Garing L.**
**814 West Foster Avenue**
**State College Pennsylvania 16802(US)**

(74) Representative: **Nony, Michel**
**Cabinet Nony 29, rue Cambacérès**
**F-75008 Paris(FR)**

(54) Ceramic sintered body.

(57) A ceramic sintered body comprises a first material comprising at least one of precursor and metastable material of the final sintered body and a second material derived from the first material and serving as additive to be added to the first material by 0.1% to 100% on particle number basis. The ceramic sintered body is sintered in a process which comprises the steps of providing a first material which comprises at least one of precursor and metastable material of the final sintered body, adding a second material and sintering mixture of the first and second materials.

EP 0 172 764 A2

# CERAMIC SINTERED BODY

## BACKGROUND OF THE INVENTION

This invention relates to dense ceramic sintered bodies with small and homogeneous grain size. In other words, this invention relates to various types of high performance sintered ceramic bodies such as engineering ceramics and electronic ceramics.

Rapid technological advances have been made in various fields such as energy conservation, information processing and life science. In accordance with advances, materials, especially ceramics, which constitute the basis of the technology, have been required to have higher quality and higher performance. Needs for development of materials with new and excellent properties and functions have had highest priority recently. Among the various needs, it is especially important to manufacture dense, homogeneous and fine-grain ceramics with high reliability at relatively low temperature.

Many technological as well as scientific advances have been achieved in the ceramic field based on the need. As an representative example, a process, which is made up of low temperature preparation of non-agglomerated monosized powders with high purity, consolidation of the powders with colloidal process, and sintering them at lower temperature than usual, has been extensively studied in many laboratories. This process would be very much attractive not only because of the possibility of circumventing such problems associated with conventional processings as inhomogeneity, grain coarsening and low reliability, but also because of energy conservation. One of the problems of the process, however, is that low temperature preparation of ceramic powders usually results in the formation of powders in metastable phases which are different from that of final sintered bodies. For example, amorphous or crystalline aluminum hodroxides are commonly obtained by low temperature syntesis of aluminum oxide and alpha alumina--thermodynamically stable phase of aluminum oxide in usual atmosphere--synthesis at low temperature has not been reported. Low temperature synthesis of $TiO_2$ and $ZrO_2$ usually leads to the formation of amorphous or metastable crystalline phases. Although it is not difficult to convert powders in metastable phases into these in the stable phases by appropriate heat treatment, problems such as much energy consumption, complexity of the process and property degradation of the powders (extraordinary grain groth, aggligation, etc.) during the treatment usually occur. On the other hand, when the powders in the metastable phases are used as starting materials for sintered ceramics without the treatment, deleterious microstructural change is commonly observed in the sintered bodies during transformations, typically from metastable to stable phase. The microstructural change is usually accompanied by rapid grain groth and formation of closed pores inside the grains. As a result, this transformation results in inhomogeneous sintered bodies with entrapped pores and corse grains. Higher temperature is also required to get dense bodies. These disadvantages are further exaggerated by adsorbed water and gases which easily leave closed pores in the sintered bodies during densification process when fine powders prepared at low temperature are used as starting materials.

Mainly because of the problems described above, many of the processes using fine powders prepared at low temperature have not achieved their potential capabilities which can give both excellent performance and high reliability of wide range of ceramics.

## SUMMARY OF THE INVENTION

Therefore, is is an object of the present invention to provide a ceramic sintered body which can have good property.

In order to accomplish the afore.entioned and other objects, a ceramic sintered body comprises:

a first material comprising at least one of precusor and metastable material of the final sintered body; and

a second material derived from the first material and serving as additive to be added to the first materail by 0.1% to 100% on particle number basis.

The second material is added to the first material before sintering the final body.

The second material is obtained by heating the first material.

The first material is boehmite and the second material is α-alumina.

The α-alumina is added to the boehmite by approximately 3% on particle number basis.

In the alternative. the first material is anatase and the second material is rutile.

The rutile is added to the anatase by approximately 3% on particle number basis.

It is another object of the present invention to provide a method or process for sintering ceramic body to provide the ceramic sintered body which can give excellent performance and high reliability.

In order to accomplish the aforementioned and other objects, a process for sintering a ceramic body comprises the steps of:

providing a first material which comprises at least one of precursor and metastable material of the final sintered body;

adding a second material derived from the first material by 0.1% to 100% on particle number basis; and

0172764

- 4 -

sintering mixture of the first and second materials.

The process further comprises a step of preparing the second material by heating the first material.

The first material is boehmite and the second material is α-alumina. The boehmite is provided in gel form.

The process further comprises a step for preparing aqueous colloidal dispersion of each of the materials by adjusting PH thereof to 3.

The α-alumina is added to the boehmite by approximately 3% on particle number basis.

In the alternative, the first material is anatase and the second material is rutile. The rutile is added to the anatase by approximately 3% on particle number basis.

The process further comprises a step for preparing aqueous colloidal dispersion of each of the materials by adjusting PH thereof to 3.

BRIEF DESCRIPTION OF THE DRAWINGS

The present invention will be understood more fully from the detailed description of the ivention given herebelow and from the accompnaying drawings of the results of experimentation which are provided merely for the sake of disclosure and should not be taken as limitative for the invention.

In the drawings:

Fig. 1 shows relationship of sintering density and sintering temperature in boehmite-α-alumina.

Fig. 2 shows relationship of sintering density and rate of α-alumina.

Fig. 3 shows relationship of sintering density and sintering temperature in anatase-rutile; and

Fig. 4 shows relationship of sintering density and rate of rutile.

## DETAILED DESCRIPTION OF THE INVENTION

This invention relates to dense ceramic sintered bodies produced from precursors and/or metastable materials (material A) of the final sintered bodies with precursor- and/or metastable material-derived materials (material B) as additives by 0.1 to 100% on particle number basis.

Before this invention, it had been one of the most serious problems to control microstructures during transformation between polyphases. Rapid grain groth and formation of closed pores during the transformation, which cause decrease in sinterability and lead to inhomogeneous sintered bodies, had been widely observed in ceramic materials. It has been demonstrated by this invention that addition of material B to material A is remarkably effective to control the microstructure during the transformation and to solve the problems mentioned above. It has also been confirmed experimentally that material B works mainly as heterogeneous nucleation sites to form more stable phase in the matrix of material A. Homogeneous dispersion of a number of particles of material B results in the concurrent formation of fine, monosized grains in the more stable phase during the transformation. Although particle size of material B is not necessarily confined to narrow range, it is desirable to use finer particles of material B for maintaining grain size small and sinterability high after the transformation. It is essential to disperse the particles of material B homogeneously in the matrix of material A. The reason amount of material B addition is limited to 0.1 - 100% on particle number basis is the following:

Because added particles of material B work mainly as heterogeneous nucleation sites in the A matrix, about 1000 particles of A are estimated to coalesce to form a grain in the more stable phase with

0.1% addition of material B. This estimation is confirmed to be correct in many experiments. In other words, the grain size after the transformation becomes ten times as large as the initial particle size of material B. During the grain coarsening, many pores are entrapped in grains and left as closed pores even after densification. So, Precise control of the microstructure can not be expected with less than 0.1% addition of material B.

On the other hand, when excess amount of material B is added, properties of sintered bodies are strongly influenced by those of material B and these sintered bodies are different from this invention. As main objective of this invention is to obtain sintered bodies with fine and homogeneous microstructure by using precursors and/or metastable phase materials as starting materials, amount of additives should be as low as possible from both technological and economical point of view. Therefore, to make effectively use of characteristics of this invention, more than 100% addition of material B is meaningless from the point of view of controlling microstructure by using heterogeneous nucleation phenomena. In many cases, less than 10% of addition is confirmed to be enough to control the microstructure and in some cases the sinterability is reduced with high amount of addition. Bases on the mechanism by which material B works, which is described above, it need hardly be said that materials with similar crystal structure and lattice constant to material B can be effectively used for material B.

EXAMPLE 1

Boehmite (A100H, average particle size: 0.05 μm) and alpha-alumina (-Al2O3, average particle size: 0.1 μm) are used as material A and B respectively.

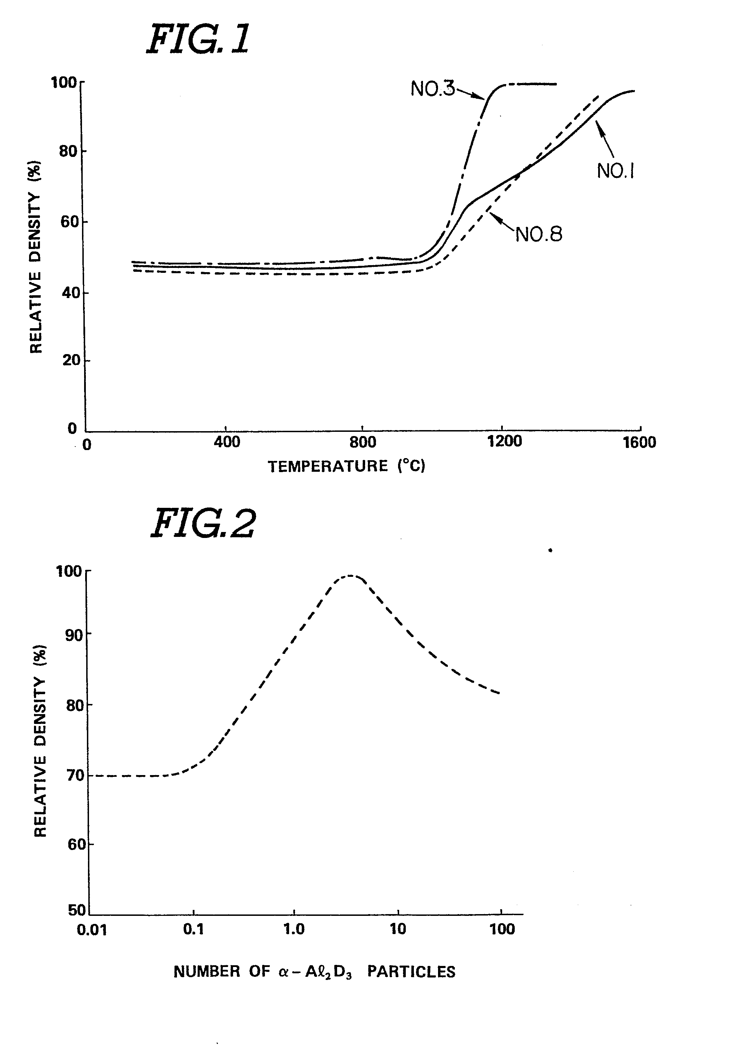

8 types of mixtures prepared are shown in Table 1. To remove agglomerates, aqueous colloidal dispersions of each powder are prepared by adjusting PH=3 and then mixed to each other in various ratios shown in Table 1. Relations between sintered density and temperature are plotted in Fig. 1 for 3 typical samples. Densities after sintered at 1200C for 100 min are plotted as a function of alpha-alumina addition. The sinterability increases rapidly with alpha-alumina addition and reaches maximum at 3% and then decreases gradually. Without alpha-alumina addition, 98% relative density is attained only when sintered at $> 1600^{\circ}$C. Many closed pores, however, were entrapped inside grains and average grain size was $> 50$ μm. Neither the sinterability nor the microstructural homogeneity were improved remarkably with 0.05% addition. On the other hand, the sinterability has been improved considerably with $\geq 0.1$% addition. 98% relative density has been attained for the sample with 3% addition after sintered at $1200^{\circ}$C for 100 min. Average grain size of the sintered body was $< 1$ μm with few closed pores inside grains. Although samples with $> 3$% addition have much better microstructure as well as higher sinterability than those without addition, the degree of improvement in terms of microstructure and sinterability decreases with increasing the addition.

EXAMPLE 2

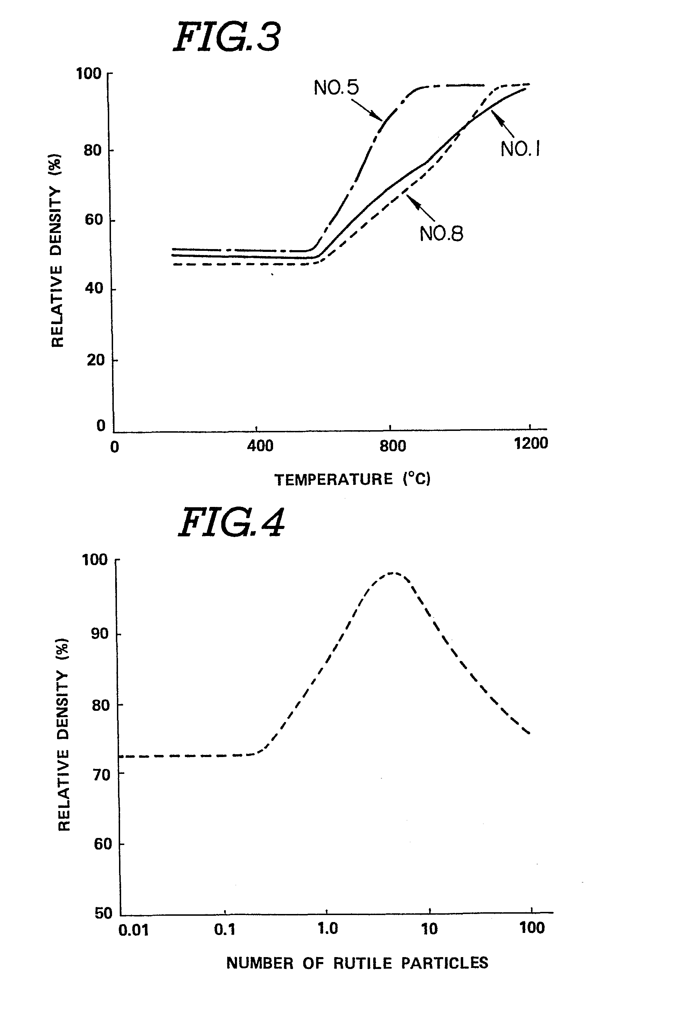

Anatase (TiO2, average particle size: 0.05 μm) and rutile (TiO2, average particle size: 0.1 μm) are used as material A and B respectively. 8 types of mixtures prepared are shown in Table 2. Aqueous colloidal dispersions of each powder are prepared and then mixed in the same way as in the example 1. Relations between sintered density and temperature are shown in Fig. 3 for typical 3 samples. Densites after sintered at 900°C for 100 min are plotted as a function of rutile addition in Fig. 4. The sinterability increases rapidly with rutile addition and reaches maximum at 3% and then decreases gradually. Both the sinterability and the microstructure have been remarkably improved with $\geq$ 0.1% rutile addition. This tendency is very much similar to that of A100H-Alpha-alumina described above.

WHAT IS CLAIMED IS:

1. A ceramic sintered body comprising:

a first material comprising at least one of precursor and metastable material of the final sintered body; and

a second material derived from said first material and serving as additive to be added to said first material by 0.1% to 100% on particle number basis.

2. The ceramic sintered body as set forth in claim 1, wherein said second material is added to said first material before sintering said final body.

3. The ceramic sintered body as set forth in claim 2, wherein said second material is obtained by heating said first material.

4. The ceramic sintered body as set forth in claim 3, wherein said first material is boehmite and said second material is $\alpha$-alumina.

5. The ceramic sintered body as set forth in claim 4, wherein said $\alpha$-alumina is added to said boehmite by approximately 3% on particle number basis.

6. The ceramic sintered body as set forth in claim 3, wherein said first material is anatase and said second material is rutile.

7. The ceramic sintered body as set forth in claim 6, wherein said rutile is added to said anatase by approximately 3% on particle number basis.

8. A process for sintering a ceramic body comprising the steps of:

providing a first material which comprises at least one of precursor and metastable material of the final sintered body;

adding a second material derived from said first material by 0.1% to 100% on particle number basis; and

sintering mixture of said first and second materials.

9.      The process as set forth in claim 8, which further comprises a step of preparing said second material by heating said first material.

10.      The process as set forth in claim 9, wherein said first material is boehmite and said second material is α-alumina.

11.      The process as set forth in claim 10, wherein said boehmite is provided in gel form.

12.      The process as set forth in claim 10, which further comprises a step for preparing aqueous colloidal dispersion of each of said materials by adjusting PH thereof to 3.

13.      The process as set forth in claim 10, wherein said α-alumina is added to said boehmite by approximately 3% on particle number basis.

14.      The process as set forth in claim 9, wherein said first material is anatase and said second material is rutile.

15.      The process as set forth in claim 14, wherein said rutile is added to said anatase by approximately 3% on particle number basis.

16.    The process as set forth in claim 14, which further comprises a step for preparing aqueous colloidal dispersion of each of said materials by adjusting PH thereof to 3.

FIG.1

FIG.2

FIG.3

FIG.4